# EUROPÄISCHE PATENTANMELDUNG

(11) **EP 0 896 921 A1**
(43) Veröffentlichungstag der Anmeldung: **17.02.1999**
(21) Anmeldenummer: 98112972.9
(22) Anmeldetag: 13.07.1998
(51) Int. Cl.: B62M 25/04, B62K 23/04

(54) **Rastenschalter, insbesondere Drehgriffschalter zur Steuerung eines Fahrradgetriebes**

(30) Priorität: 11.08.1997 DE 19734685
(71) Anmelder: SRAM Deutschland GmbH, 97424 Schweinfurt (DE)
(72) Erfinder: Rottmann, Franz, Dipl.-Ing., 97422 Schweinfurt (DE)

(57) **Zusammenfassung**

Die Erfindung zeigt einen Rastenschalter mit einer Rastenfeder (4) in einem Gehäuse (1), die mit einer Nase (14) in Rasten (3) eines Drehelementes (2) eingreift, welches mit einem Drehgriff in Verbindung steht. Die Rastenfeder (4) weist einen äußeren (12) und einen inneren (13) Federbügel auf, die zusammen mit einer Biegung (15) eine haarnadelähnliche Form der Rastenfeder (4) bilden. Durch die Abstützung des inneren Federbügels (13) auf einem entlang des inneren Federbügels (13) verschiebbaren Abstützteil (16) kann die Steifigkeit der Rastenfeder (4) verändert werden. Durch die Schwingfähigkeit der relativ langen Federbügel (13,14) wird ein für den Benutzer willkommenes Geräusch erzeugt, das als akustische Rückmeldung für die Schaltbewegung dient.

## Beschreibung

Die Erfindung betrifft einen Rastenschalter, insbesondere Drehgriffschalter zur Steuerung eines Fahrradgetriebes gemäß dem Oberbegriff des Anspruchs 1.

Mit der EP 676 325 A2 ist eine Rastenfeder bekannt geworden, die einen nach radial innen gerichteten Basisteil mit zwei Enden aufweist sowie einen freien Arm, dessen Ende eine Nase zum Eingriff in Rasten eines Drehelements aufweist. Diese Feder liegt in einer Aussparung des Gehäuses mit ihren beiden Enden nach radial innen an und der freie Arm kann, hervorgerufen durch den Eingriff in die Rasten des Drehelements, schwingen, und beim Drehen des Drehelements von einer Raste zur anderen Raste einschnappen. Der freie Arm ist von dem einen Ende bis zur Nase relativ kurz ausgeführt, weshalb die Feder eine steil ansteigende Federsteifigkeit aufweist.

Die vorliegende Erfindung schlägt eine Rastenfeder vor, bei welcher der Anstieg der Federrate weniger steil verläuft. Erzielt wird dies mit einem wesentlich längeren freien federnden Anteil der Feder zwischen der Nase und dem nächstliegenden Auflager. In den etwa gleich großen Platzverhältnissen im Gehäuse kann die haarnadelförmig gebogene Feder durch die übereinander angeordneten Federbügel mit annähernd gleichbleibenden Kräften über den Federweg bewegt werden, wobei die Höhe der anliegenden Kraft zwischen der Nase und den Rasten im Drehelement durch die Verlagerung eines Abstützteils von dem einen Federende bis direkt unter die Nase verändert werden. Von Vorteil ist ferner die Möglichkeit, einen Totgang beim Betätigen des Drehelements zu erreichen, der entweder durch einen Haken an einem Federende in einer dafür vorgesehenen Aussparung im Gehäuse oder aber durch die Anordnung von zwei Anschlägen im Gehäuse erreicht wird.

Schließlich wurde durch die Verwirklichung von langen, frei schwingenden Federbügeln der Rastenfeder erreicht, daß das Einrasten der Nase in die Rasten des Drehelements mit einem vernehmlichen Geräusch verbunden ist, welches als akustische Rückmeldung an den Fahrer sehr erwünscht ist.

Es ist daher die Aufgabe der Erfindung, eine Rastenfeder für einen Rastenschalter, insbesondere einen Drehgriffschalter für Fahrradgetriebe zu erstellen, deren Nase mit ausreichend großer Kraft mit Rasten im Drehelement zusammenwirken kann, wobei sich die Kraft über dem Federweg nur unwesentlich verändert. Eine einfache Verstellung eines Abstützteils soll alle Anforderungen an die Verstellkräfte der Bedienung abdecken; die Geräusche beim Betätigen des Drehelements sollen deutlich vernehmbar sein.

Die Lösung der Aufgabe geht aus dem kennzeichnenden Anteil des Anspruchs 1 hervor; ergänzende Merkmale zur Abrundung der vorgeschlagenen Lösung sind den Merkmalen der Unteransprüche zu entnehmen.

Mehrere Ausführungsbeispiele werden anhand von Ausschnittzeichnungen veranschaulicht. Es zeigen:
- Fig. 1: einen Drehgriffschalter mit einem Gehäuse, einem Drehelement und einer Rastenfeder mit einem Abstützteil;
- Fig. 2: die Rastenfeder gemäß Fig. 1, jedoch mit einem Haken in einer Aussparung des Gehäuses;
- Fig. 3: eine Rastenfeder mit der Fixierung des inneren Federbügels in der Aussparung und einem äußeren Federbügel, der an der Nase endet.

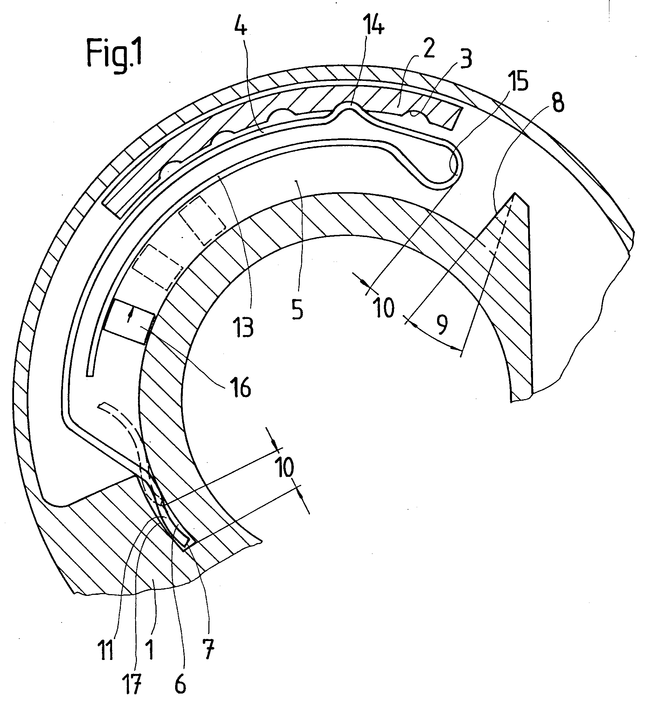

Gemäß Fig. 1 wird ein Rastenschalter dargestellt, bestehend aus einem Gehäuse 1, einem Drehelement 2 mit Rasten 3 und einer Rastenfeder 4, die um eine Biegung 15 harrnadelförmig gekrümmt ist. Die Rastenfeder 4 ist in einem Ring-raum 5 des Gehäuses 1 angeordnet, der eine Aussparung 6 aufweist, in die ein Federende 11 eingreift, wobei sich die Rastenfeder 4 im Einbauzustand an der radial außen liegenden Flanke der Aussparung abstützt und ein Widerlager 17 bildet. Die Rastenfeder 4 weist einen konzentrisch verlaufenden äußeren Federbügel 12 und einen hierzu parallel verlaufenden inneren Federbügel 13 auf, die über die Biegung 15 in Verbindung stehen. Im äußeren Federbügel 12 ist eine Nase 14 angeordnet, die mit den Rasten 3 des Drehelementes 2 zusammenwirken. Zur Bereitstellung der Federkraft der Nase 14 in den Rasten 3 dient ein drittes Auflager der Rastenfeder 4 mit seinem inneren Federbügel 13 auf einem Abstützteil 16, welches an einem beliebigen Ort des inneren Federbügels 12 plaziert werden kann, um die für den jeweiligen Bedarfsfall erforderliche Anpreßkraft der Nase 14 gegen die Rasten 3 sicherzustellen. Das Drehelement 2 steht mit einem hier nicht dargestellten Drehgriff in direkter Verbindung, weshalb der diesen Drehgriff bedienende Fahrer das Ausrasten der Nase 14 aus einer der Rasten 3 sowie das Einrasten der Nase 14 in die benachbarte Raste 3 fühlen kann. Zur besseren Schaltbarkeit, insbesondere von Kettenschaltungen von einem kleineren auf ein größeres Zahnrad, ist ein gewisser Überschaltweg erforderlich, welcher einem Totgang 10 entspricht, der dann entsteht, wenn die Rastenfeder 4 im Uhrzeigersinn verschoben wird: Bevor nämlich die Nase 14 aus dem Eingriff in der Raste 3 ausgesteuert wird, wird die Rastenfeder 4 vom Drehelement 2 solange mitgenommen, bis der Totgang 10 zwischen der Biegung 15 und einem Anschlag 8 im Ringraum 5 des Gehäuses 1 durchlaufen ist. In der Ruhestellung der Rastenfeder 4 schlägt das Federende 11 gegen einen Anschlag 7 in der Aussparung 6 an, woraus ersichtlich ist, daß der Totgang 10 nur beim Verdrehen des Drehelementes 2 im Uhrzeigersinn in Anspruch genommen wird. Wird hingegen gegen den Uhrzeigersinn geschaltet, so wechselt die Nase 14 zur benachbarten Raste 3 des Drehelementes 2 sofort und ohne Inanspruchnahme eines Totgangs. Da beim Schalten im Uhrzeigersinn die Biegung 15 gegen den Anschlag 8 anläuft, so wird die Nase 14 aus der Raste 3 bei gleichzeitigem Entlanggleiten der Biegung 15 am Anschlag 8 ausgesteuert. Es erweist sich als vorteilhaft, den Anschlag 8 derart zu modifizieren, daß die Reibung der Biegung 15 am Anschlag 8 ein gewisses Maß nicht überschreitet. Aus diesem Grunde folgt die Kontur des Anschlags 8 nicht einem idealen Radius, sondern einer Kante mit einem bestimmten Winkel 9 hiervon, um den Schaltvorgang durch die Überlagerung einer gezielten Reibungskomponente zu optimieren.

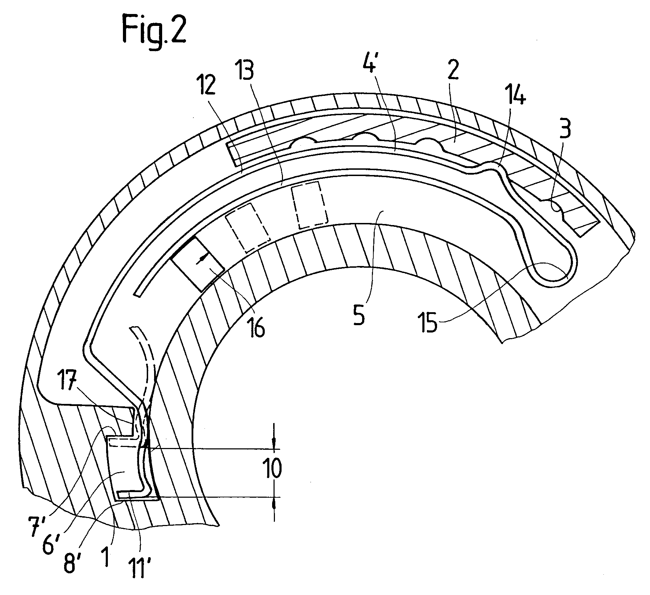

Wie aus der Fig. 2 hervorgeht, hat sich die Rastenfeder 4 im Bereich des Federendes 11 in der Weise geändert, daß die neue Rastenfeder 4' im Bereich eines inneren Federbügels 13' sowie eines äußeren Federbügel 12' gleichgeblieben ist, gegenüber der alten Rastenfeder 4 lediglich am Federende 11 wurde ein Haken 11' angebogen, der in eine modifizierte Aussparung 6' ragt, die einen ersten Anschlag 7' und einen zweiten Anschlag 8' aufweist, die voneinander eine Entfernung haben, die der Rastenfeder 4' einen Totgang 10 durch wechselseitiges Anschlagen erlaubt.

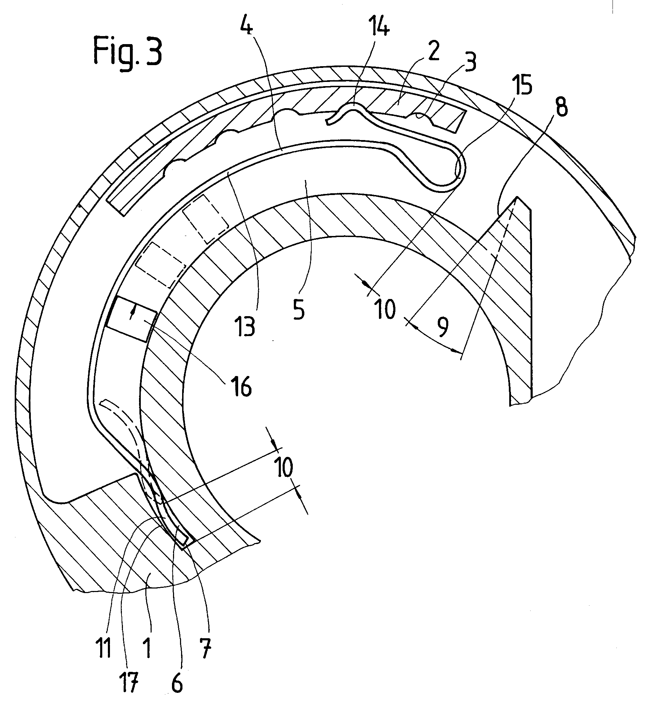

Wie aus der Fig. 3 ersichtlich, wurde die Rastenfeder 4'' in der Weise modifiziert, daß ein äußerer Federbügel 12'' von der Nase 14 zur Biegung 15 reicht, wobei die Rastenfeder 4'' direkt hinter der Nase 14 endet. Ein innerer Federbügel 13'' stützt sich auf den Abstützteil 16 ab, bevor sein Federende 11'' in der Aussparung 6 am Widerlager 17 endet. Der Totgang der Rastenfeder 4'' ist identisch mit dem der oben beschriebenen Rastenfeder 4 zwischen der Biegung 15 und dem Anschlag 8 im Ringraum 5. Die Rastenfeder 4'' kann ähnlich wie die Rastenfeder 4' einen Haken 11' aufweisen, der sich in einer Aussparung 6' zur Erzeugung des Totganges 10 hin- und herbewegt.

Aufgrund unterschiedlicher Anforderungsprofile für den Drehgriffschalter bei verschiedenartigen Fahrrädern wird angestrebt, mit ein und derselben Feder 4 bzw. 4' bzw. 4'' durch Erzeugung unterschiedlicher Anpreßdrücke der Nase 14 gegen die Rasten 3 im Drehelement 2 gerecht zu werden. Aus diesem Grunde wird das Abstützteil 16 vom Ende des inneren Federbügels 13, 13',bzw.13'' im Uhrzeigersinn in Richtung zur Biegung 15 hin verdreht, wodurch sich die freie Federlänge zwischen der Nase 14 und der Anlage am Abstützteil 16 immer mehr verkürzt. Die Folge hiervon ist, daß sich die Federrate erhöht und die Kraft zum Aussteuern der Nase 14 aus der Raste 3 ebenfalls erhöht wird.

Ein weiterer Vorteil der Anordnung einer Rastenfeder 4,4',4'' ist die Möglichkeit, auch einen akustisch besonders gut hörbaren Schaltprozeß zu erreichen, da insbesondere bei den Rastenfedern 4 und 4' von ihren besonders langen Federbügeln 12,12' und 13,13' eine gewollt große Geräuschabstrahlung ausgeht. Die Rastenfeder 4'' dürfte wegen der Verkürzung des äußeren Federbügels 12'' bei der gewollten Geräuschbildung weniger stark in Frage kommen. Trotzdem dürfte sie zur Realisierung von Schaltern mit gewollt hohen Schaltkräften beim Verdrehen des Drehelements 2 ihre Vorteile haben.

## Patentansprüche

1. Rastenschalter, insbesondere Drehgriffschalter eines Fahrradgetriebes, umfassend
* ein Gehäuse (1) mit einem Ringraum (5),
* ein vom Fahrer betätigbares Drehelement (2),
* eine Rastenfeder (4,4',4''),
* wobei die Rastenfeder (4,4',4'') zwischen dem Drehelement (2) und dem drehfest angeordneten Gehäuse (1) angeordnet ist und
* eine Nase (14) aufweist, die durch Betätigen des Drehelements (2) mit verschiedenen Rasten (3) nacheinander in Eingriff bringbar ist,
dadurch gekennzeichnet,
daß die Rastenfeder (4,4',4'') haarnadelförmig mit einer Biegung (15) ausgeführt ist, die die Rastenfeder (4,4',4'') in einen äußeren Federbügel (12,12',12'') und einen inneren Federbügel (13,13',13'') unterteilt, wobei beide Federbügel (12,12',12'';13,13',13'') konzentrisch übereinander den gekrümmten Seiten des Ringraums (5) folgend angeordnet sind.

2. Rastenschalter nach Anspruch 1,
dadurch gekennzeichnet,
daß einer der beiden Federbügel, vorzugsweise der äußere Federbügel (12,12') ein Federende (11,11') aufweist, das sich in einer ein Widerlager (17,17') bildenden Aussparung (6,6') in Radialrichtung abstützt und in tangentialer Richtung verschieben läßt.

3. Rastenschalter nach einem der Ansprüche 1 oder 2,
dadurch gekennzeichnet,
daß die Rastenfeder (4) in einem Ringraum (5) des Gehäuses (1) angeordnet ist, der einen ersten Anschlag (7) in der Aussparung (6) für die Rastenfeder (4) und einen zweiten Anschlag (8) für die Biegung (15) der Rastenfeder (4) aufweist, wobei beim Hin- und Herdrehen des Drehelementes (2) ein Totgang (10) entstehen kann.

4. Rastenschalter nach einem der Ansprüche 1 bis 3,
dadurch gekennzeichnet,
daß einer der beiden Federbügel, vorzugsweise der innere Federbügel (13,13',13'') mit dem Gehäuse über ein Abstützteil (16) in Verbindung steht.

5. Rastenschalter nach einem der Ansprüche 1 bis 4,
dadurch gekennzeichnet,
daß das Abstützteil (16) entlang der gesamten Länge des inneren Federbügels (13,13',13'') bis mindestens unter die Nase (14) verschiebbar ist.

6. Rastenschalter nach einem der Ansprüche 1,4, oder 5,
dadurch gekennzeichnet,
daß die Rastenfeder (4') einen Haken (1') aufweist, der in eine Aussparung (6) ragt, wo er durch wechselseitiges Anschlagen an einem ersten Anschlag (7') und an einem zweiten Anschlag (8') einen Totgang (10) erzeugen kann.

7. Rastenschalter nach einem der Ansprüche 1 bis 6,
dadurch gekennzeichnet,
daß der innere Federbügel (13'') mit dem Federende (11'') verbunden ist und durch das Abstützteil (16) abgestützt wird, während der äußere Federbügel (12'') lediglich zwischen der Biegung (15) und der Nase (14) angeordnet ist und mit der Nase (14) endet.

8. Rastenschalter nach Anspruch 3,
dadurch gekennzeichnet,
daß der Anschlag (8) einen Winkel (9) aufweist.

9. Rastenschalter nach einem der Ansprüche 1 bis 8,
dadurch gekennzeichnet,
daß die Rastenfeder (4,4'4'') aus Federbandmaterial mit Rechteckquerschnitt besteht.
